# EUROPEAN PATENT APPLICATION

(11) **EP 4 762 971 A1**
(43) Date of publication of application: **24.06.2026**
(21) Application number: 25225200.2
(22) Date of filing: 18.12.2025
(51) Int. Cl.: A43B 7/142, A43B 7/143, A43B 7/1455, A43B 7/19, A43B 13/12, A43B 13/18

(54) **RECOVERY SHOE AND METHOD OF MAKING THE SAME**

(30) Priority: 18.12.2024 US 202463735642 P
(71) Applicant: FILA LUXEMBOURG S.à r.l., 2449 Luxembourg (LU)
(72) Inventor: Bond, David, L-2449 Luxembourg (LU); Sheehan, Mark, L-2449 Luxembourg (LU); Kim, Kwantae, L-2449 Luxembourg (LU); Peveto, Mikal, L-2449 Luxembourg (LU)
(74) Representative: Pfundner, Benjamin Patrick

(57) **Abstract**

A shoe includes a sole and an upper over the sole. The sole includes a base and an insert. The base includes a toe portion, a heel portion, and an arch portion arranged between the toe portion and the heel portion. The insert is arranged in the arch portion of the base and further protrudes into the arch portion from a first surface of the base. A lowermost position of the insert is a lowest point of a first surface of the sole with respect to a ground. The upper includes a toe portion, a rear portion, and a tongue arranged between the toe portion and the rear portion of the upper. The insert is configured to provide pressure into an arch region of a foot of a user when the shoe is worn and the sole is pressed by the user.

## Description

### TECHNICAL FIELD

The present disclosure describes aspects generally related to a shoe. In an aspect, a sole of the shoe includes an insert positioned at a medial side of an arch area of a shoe.

### BACKGROUND

The background description provided herein is for the purpose of generally presenting the context of the disclosure. Work of the presently named inventors, to the extent the work is described in this background section, as well as aspects of the description that may not otherwise qualify as prior art at the time of filing, are neither expressly nor impliedly admitted as prior art against the present disclosure.

Recovery shoes, also known as post-workout or after-sport shoes, may be designed to provide comfort and support to individuals after physical activity. After intense physical activity, a plantar venous system of a person may be under increased stress. In addition, intense physical activity may lead to foot and ankle swelling, which can, in turn, impact a function of the plantar venous system. Recovery shoes which are designed with cushions and arch supports to relieve pressure on the soles of the feet can help reduce fatigue and discomfort in the feet, potentially promoting better venous circulation in lower extremities of the person. When muscles in the feet are relaxed, the muscles can support a natural function of the plantar venous pump, which helps with venous return to the heart.

### SUMMARY

Aspects of the disclosure include recovery shoes and methods of making the recovery shoes. In some examples, a recovery shoe includes an insert in a sole of the recovery shoe to improve a venous circulation in lower extremities of a person.

According to an aspect of the disclosure, a shoe is provided. The shoe includes a sole. The sole includes a base and an insert. The base includes a toe portion, a heel portion, and an arch portion arranged between the toe portion and the heel portion. The insert is arranged in the arch portion of the base and further protrudes into the arch portion from a first surface of the base. A lowermost position of the insert is a lowest point of a first surface of the sole with respect to a ground. The shoe includes an upper over the sole. The upper includes a toe portion, a rear portion, and a tongue arranged between the toe portion and the rear portion of the upper. The insert is configured to provide pressure into an arch region of a foot of a user when the shoe is worn and the sole is pressed by the user.

In an aspect, the base and the insert are made of different materials.

In an aspect, a density of the insert and a density of the base are different.

In an aspect, a density of the insert is larger than a density of the base.

In an aspect, a center position of the insert is shifted from a center position of the arch portion of the base by a distance from 4mm to 8mm such that the center position of the insert is closer to a medial side of the shoe than a lateral side of the shoe.

In an aspect, at least one recessed region is formed in the base of the shoe that is arranged concentrically around the insert.

In an aspect, the insert has one of an oval cross-sectional shape and a rounded triangle cross-sectional shape obtained from a vertical plane along a direction from the toe portion to the heel portion of the base.

In an aspect, the insert has one of an oval cross-sectional shape and a rounded triangle cross-sectional shape obtained from a vertical plane along to a direction from a medial side to a lateral side of the shoe.

In an aspect, the insert is positioned in the arch region of the foot and configured to pump blood of a venous plexus near the arch region of the foot.

In an aspect, the insert and the base are separate pieces, where the insert is attached to the base by inserting from the first surface of the base of the sole.

In an aspect, the insert and the base are a single piece that is formed together based on a mold.

In an aspect, the lowermost position of the insert is positioned on a medial side of the arch portion and corresponds to veins in the arch region of the foot.

In an aspect, the first surface of the insert is a curved surface that protrudes from the first surface of the base of the sole.

According to another aspect of the disclosure, a method of making the shoe is provided. In the method, a base of a sole is formed based on a first mold, where the base includes a toe portion, a heel portion, and an arch portion arranged between the toe portion and the heel portion. An insert of the sole is formed. The insert is arranged in the arch portion of the base and further protruding into the arch portion from a first surface of the base. A lowermost position of the insert is a lowest point of a first surface of the sole that is in contact with a ground. An upper is formed over the sole, where the upper includes a toe portion, a rear portion, and a tongue arranged between the toe portion and the rear portion.

In an aspect, the insert of the sole is formed based on a second mold such that the insert and the base are separate pieces.

In an aspect, the insert of the sole is formed based on the first mold such that the insert and the base are of a single piece that is formed together based on the first mold.

In an aspect, a center position of the insert is shifted from a center position of the arch portion of the base by a distance from 4mm to 8mm such that the center position of the insert is closer to a medial side of the shoe than a lateral side of the shoe.

In an aspect, at least one recessed region is formed in the base of the shoe such that the at least one recessed region is arranged concentrically around the insert.

In an aspect, the insert is positioned around an arch region of a foot and configured to pump blood of a venous plexus in the arch region of the foot.

In an aspect, the lowermost position of the insert is positioned on a medial side of the arch portion and corresponds to veins in an arch region of a foot.

### BRIEF DESCRIPTION OF THE DRAWINGS

Further features, the nature, and various advantages of the disclosed subject matter will be more apparent from the following detailed description and the accompanying drawings in which:
FIG. 1A is a schematic illustration of a side view of an exemplary recovery shoe according to some aspects of the disclosure.
FIG. 1B is a schematic illustration of a bottom view of the exemplary recovery shoe according to some aspects of the disclosure.
FIG. 1C is a schematic illustration of a sole of the exemplary recovery shoe according to some aspects of the disclosure.
FIG. 2 is another schematic illustration of the sole of the exemplary recovery shoe according to some aspects of the disclosure.
FIG. 3 is a schematic illustration of a weight-bearing area and a compression area of a foot according to some aspects of the disclosure.
FIG. 4 is a schematic illustration of a medial side view of a sole of the exemplary recovery shoe according to some aspects of the disclosure.
FIG. 5 is a schematic illustration of a bottom view of the sole of the exemplary recovery shoe according to some aspects of the disclosure.
FIG. 6 is a schematic illustration of a lateral side view of the sole of the exemplary recovery shoe according to some aspects of the disclosure.
FIG. 7 is a cross-sectional view of the exemplary recovery shoe according to some aspects of the disclosure.
FIG. 8 is a top view of the exemplary recovery shoe according to some aspects of the disclosure.
FIG. 9 shows various cross-sectional views of the exemplary recovery shoe according to some aspects of the disclosure.
FIG. 10A shows a bottom view of the exemplary recovery shoe according to some aspects of the disclosure.
FIG. 10B shows a cross-sectional view of the exemplary recovery shoe according to some aspects of the disclosure.
FIG. 11 shows a flow chart outlining a manufacturing process according to some aspects of the disclosure.

### DETAILED DESCRIPTION

According to a previous report on recovery shoes, most recreational runners step 150~170 per minute. Thus, having recovery shoes can be helpful to relax and begin the rebuilding process such as recovering from muscle fiber breakdowns, swelling foot, or lowering of the foot arch after a race.

A sport activity, such as running, may be characterized based on a running cadence. The running cadence is defined as steps / minute (spm). Most recreational runners may have a running cadence of 150 to 170 spm. Recovery is one of critical phases of running. Having recovery shoes can be helpful to relax and begin a rebuilding process, such as recovering from muscle fiber breakdowns, swelling foot, or lowering of a foot arch after a race.

During long-distance running, a lowering arch height occurs gradually due to repetitive loading, as well as instantaneously at every stance phase. A foot posture changed to a more pronated position after a half marathon race in 20-53-year-old volunteers registered to run a half marathon race.

If recovery from the sport activity takes time, a risk of injury may increase, since the foot posture and/or the foot parameter alterations may change running mechanics.

In an aspect, arch support insoles may decrease peak VO2 significantly during uphill and downhill walking. The peak VO2 is a measurement of a maximum amount of oxygen that a human body may utilize during intense exercise. The arch support insoles may reduce fatigue of a rectus femoris muscle during downhill walking. Insole hardness may increase not only a physical sensory input but also the fatigue of lower-limb muscles such as for the rectus femoris muscle in a person with a flatfoot during uphill walking.

In an aspect, requirements for recovery shoes may include an arch support, a cushioning, a wide toe box, breathability, a light weight, and a rocking sole design. In an example of the rocking sole design, a shoe sole promotes a natural rolling motion during walking or running. The natural rolling motion may be characterized by a curved or curvedup shape, such as at a forefoot, which may encourage a smoother transition from heel strike to toe-off.

A plantar venous plexus is located in a sole of a foot, under an arch area (or arch region) of the foot. The planar venous plexus is a built-in return pump for blood. Each time a foot interacts with a ground surface, the plantar venous plexus is flattened, stretched, and squeezed, pumping blood back to a heart. By creating a midsole geometry whereby when a weight is applied, the created midsole geometry may stimulate the pumping of blood, helping aid in recovery from muscular trauma through sport exertion.

The planar venous plexus includes multiple large-diameter veins that span the arch of the foot. Compression of the planar venous plexus, which may occur during ambulation, is capable of significantly increasing a flow through a posterior tibial venous system into a popliteal vein.

In an aspect of the disclosure, a test plan for a pulse (recovery) shoe may include steps as follows: At step 1, control shoes (e.g. running shoes) were worn and an exercise stress test is conducted by participants. At step 2, an exercise stress test is conducted until the participants exercise all-out through according to a VO2 max and RPE (rate of perceived exertion) monitoring. In an example, VO2 max is a physiological measure that indicates a maximum amount of oxygen which a body can utilize during intense exercise. RPE is a subjective measure used to gauge an intensity of a physical activity based on how a person feels during exercise. RPE can be a valuable tool for monitoring a person's workout intensity, especially when a heart rate monitor or other objective measures are not available. At step 3, after reaching the all-out state, the participants change into recovery shoes and proceed with cooling down. At step 4, fatigue recovery is observed through a lactate acid analysis before and after the exercise stress test. In an example, after the test, lactate acid levels are monitored at 5-minute intervals to observe the fatigue recovery.

A plantar venous pump includes a plurality of plantar veins that are located deep between plantar muscles and compressed by weight bearing during walking. The plantar venous pump may refer to a mechanism by which veins in the sole of the foot help return blood to the heart. The planar venous pump is part of the overall venous system and plays a crucial role in maintaining proper circulation of the blood. In an aspect, the venous pump of the foot is a first step in the venous return of blood during walking, just before a calf pump. The plantar venous pump is important in the legs and feet because a blood flow in these areas faces a challenge of moving against gravity to return to the heart.

Foot reflexology is a therapeutic practice that involves applying a pressure to specific points on the feet. The foot reflexology can help stimulate a blood flow in the feet and lower legs and improve circulation of the blood. The improved circulation may be beneficial for individuals with venous issues, as it may reduce swelling and discomfort associated with poor blood flow. By promoting lymphatic drainage and blood circulation, foot reflexology may assist in a fluid movement and reduce edematous conditions. Foot reflexology may help alleviate pain in the feet, especially if a person has been on the feet for extended periods or has conditions like plantar fasciitis. The pressure applied during foot reflexology may help reduce muscle tension and pain. Increased energy levels and vitality are reported after a foot reflexology, which may be due to an improved circulation and relaxation of tense muscles.

A plantar venous arch is a network of veins located on the sole (e.g., a plantar surface) of the human foot. This vascular network is responsible for draining blood from tissues of the foot and returning the blood to larger veins of the lower limb, ultimately leading back to the heart. At rest, the planar venous pump may not be active, therefore the planar venous arch is necessary to provide a specific continuity of venous return.

In the disclosure, a recovery shoe is provided. The recovery shoe (or shoe) includes an insert (or a core) that is arranged in an arch portion of a sole of the shoe. A lowermost position of the insert is a lowest point of a first surface of the sole with respect to a ground. The insert is positioned on a medial side of the shoe, and corresponds to large veins (e.g., the large veins of the plantar venous plexus) in an arch region of a foot of a user. The insert is configured to perform foot reflexology. For example, the insert may provide pressure into the arch (e.g., plantar venous arch) of the user when the shoe is worn and the sole is pressed by the user. The pressure may stimulate the veins in the arch region of the foot through the insert and promote a blood flow via the plantar venous pump. The promoted blood flow may help aid in recovery from muscular trauma through sport exertion and reduce fatigue of lower-limb muscles (e.g., the rectus femoris muscle) in the user with a flatfoot during uphill walking.

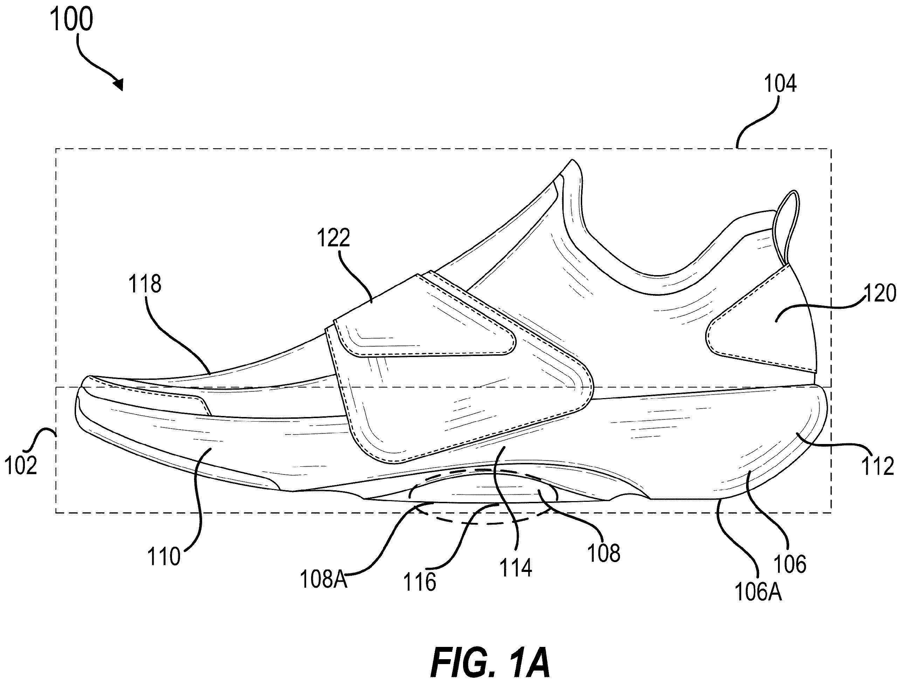

An exemplary recovery shoe (or shoe) 100 is shown in FIG. 1A. As shown in FIG. 1A, the shoe 100 includes a sole 102 and an upper 104 over the sole 102. The sole 102 includes a base 106 and an insert 108. The base 106 includes a toe portion 110, a heel portion 112, and an arch portion 114 arranged between the toe portion 110 and the heel portion 112. The insert 108 is arranged in the arch portion 114 of the base 106 and further protrudes into the arch portion 114 from a first surface 106A of the base 106. A lowermost position (or point) 116 of a first surface 108A of the insert 108 is lower than the first surface 106A of the base 106 with respect to a surface (e.g., the ground) that is in contact with the shoe. The upper 104 includes a toe portion 118, a rear portion 120, and a tongue 122 arranged between the toe portion 118 and the rear portion 120. The insert 108 is configured to provide pressure into an arch region of a foot (not shown) of a user (not shown) when the shoe 100 is worn and the sole is pressed by the user.

Still referring to FIG. 1A, a midsole (or the arch portion) 114 of the shoe 100 includes a core (also referred to as an insert) 108. The lowermost position (or point) 116 of the insert 108 is positioned at a medial side of the arch area and is a lowest point of the shoe 100 with respect to the ground. In other words, when the shoe 100 is put on a table, the insert 108 protrudes lower than any other surface (e.g., 106A) of the shoe 100. Such a protruding geometry of the shoe 100 may cause a pressure to be applied to a set of veins that is located deep underneath the arch area of a foot of a user. The set of veins is stimulated by the insert 108 according to a repetitive basis (or loading) when the user walks or performs sport activities. For example, the foot of the user may press a ground during walking. A pressure may be returned to the arch area of the foot via the insert 108. The pressure back from the ground via the insert 108 may stimulate the veins in the arch area of the foot and promote the blood flow via the plantar venous pump.

In an aspect, the base 106 and the insert 108 are made of different materials. In an aspect, the base 106 and the insert 108 are made of a same material.

In an aspect, a density of the insert 108 and a density of the base 106 are different. In an aspect, the density of the insert 108 is larger than the density of the base 106.

In an aspect, the insert 108 and the base 106 are separate pieces, where the insert 108 is attached to the base 106 by inserting into the base 106 from the first surface 106A of the base 106.

In an aspect, the insert 108 and the base 106 are a single piece that is formed together based on a mold.

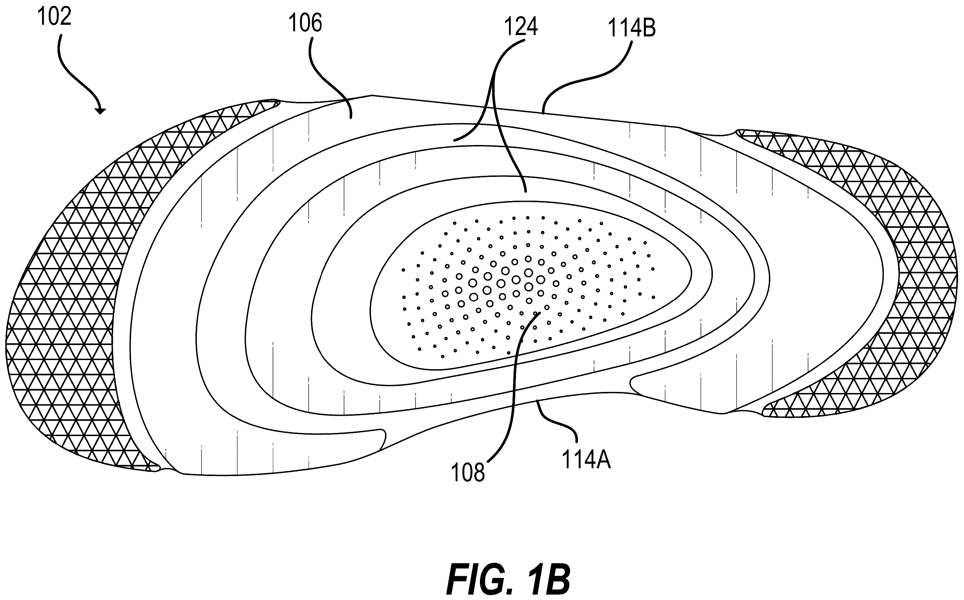

FIG. 1B shows a bottom view of the shoe 100. As shown in FIG. 1B, the base 106 includes one or more recessed regions 124 that are concentrically arranged around the insert 108. The insert 108 is closer to a medial side 114A of the arch portion 114 than a lateral side 114B of the arch portion 114.

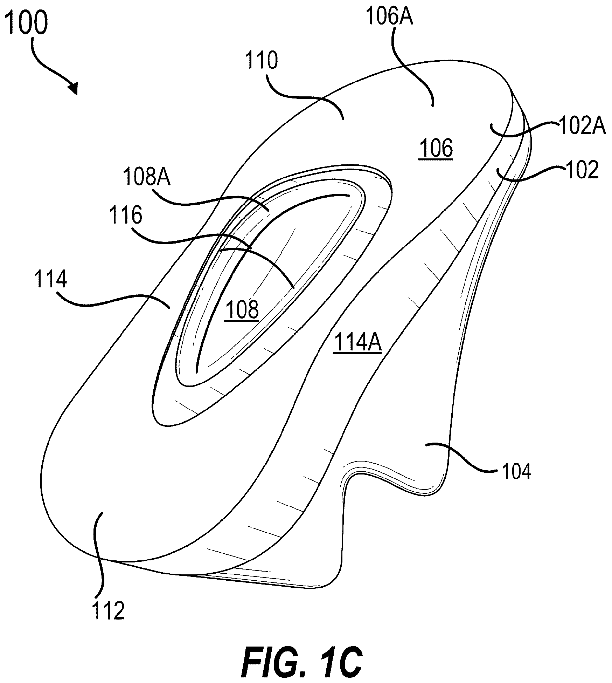

FIG. 1C shows another bottom view of the shoe 100. As shown in FIG. 1C, the lowermost position 116 of the insert 108 is a lowest point of a first surface 102A of the sole 102. The first surface 102A of the sole 102 is a contact face to a ground. The first surface 102A of the sole 102 may include the first surface 108A of the insert 108 and the first surface 106A of the base 106. The insert 108 is positioned on a medial side 114A of the arch portion 114 of the base 106 and corresponds to large veins of the arch region of the foot (not shown). In an aspect, the first surface 108A of the insert 108 (corresponding to the lowermost position 116) is a curved surface that protrudes from the first surface 106A of the base 106 of the sole.

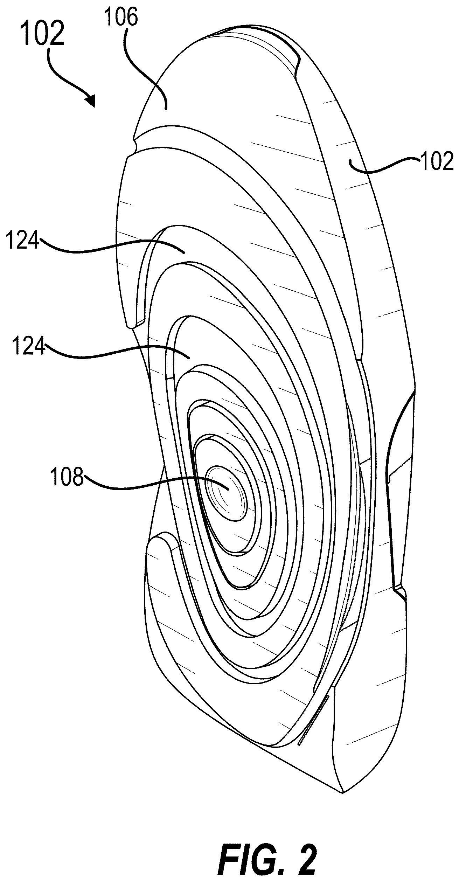

FIG. 2 shows an expanded view of the sole 102. As shown in FIG. 2, the base 106 includes one or more recessed regions 124. The one or more recessed regions 124 are arranged concentrically around the insert 108. In an aspect, the recessed regions 124 are configured to assist in activating the insert 108 to stimulate the veins in the arch area of the foot. In an aspect, the recessed regions 124 define a cavity in the base 106 with a lesser thickness, which in turns weakens the area of the insert 108. The recessed regions 124 thus isolate the area of the insert 108 and creates a clefted area that allows for changing a rate of motion of a user. In an aspect, the recessed regions 124 are formed by removing materials from the base 106 in the recessed regions. In an aspect, the recessed regions 124 are created based on a mold in which patterns are provided to form the recessed regions.

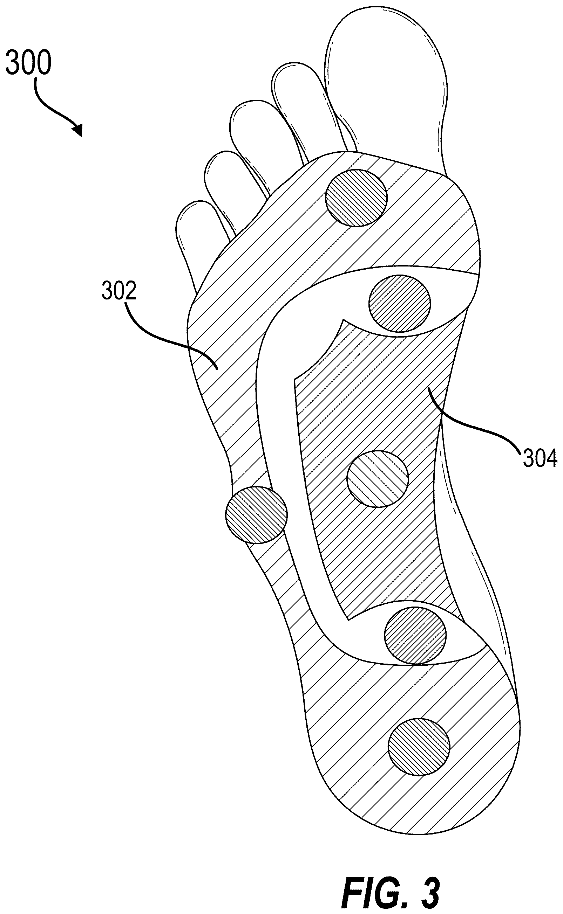

FIG. 3 shows regions of a foot 300. The foot 300 includes a weight-bearing area 302. The foot 300 also includes a manual compression area 304 of the plantar veins. The manual compression area 304 may be positioned in an arch region of the foot 300. In an aspect of the disclosure, a core/insert (e.g., 108) is included in a sole (e.g. 102) of a shoe (e.g., 100). The core (or insert) may stimulate the manual compression area 304 of the plantar veins, which may improve the blood circulation through the plantar venous pump. Accordingly, recovery for the person after the sport activity (e.g., running) is promoted.

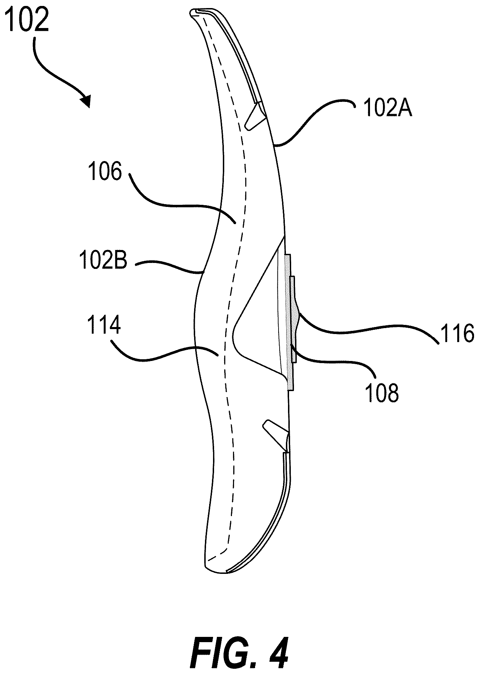

FIG. 4 is a medial side view of the sole 102 according to some aspects of the disclosure. As shown in FIG. 4, the sole 102 has a first surface 102A and a second surface 102B that is opposite to the first surface 102A. The first surface 102A is a contact surface to a surface, such as a ground. The second surface 102B is a contact surface to a foot, such as the foot 300. In an aspect, the lowermost position 116 of the insert 108 is a lowest point of the first surface 102A of the sole 102. The second surface 102B of the sole 102 protrudes toward an arch region (not shown) of the foot from the arch portion 114 of the base 106.

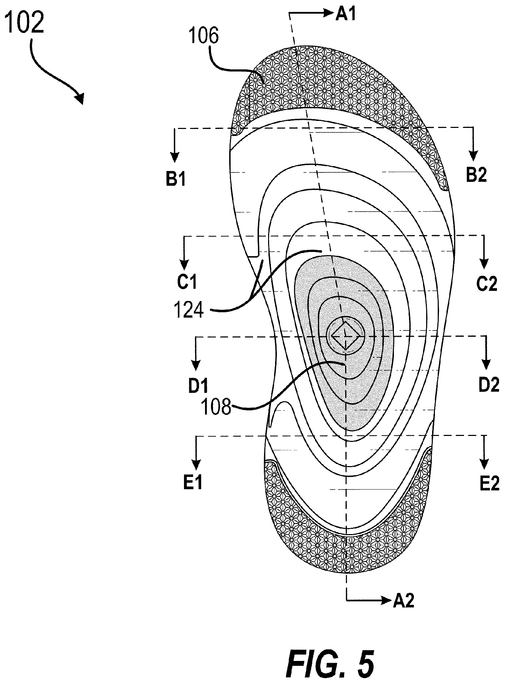

FIG. 5 is a bottom view of the sole 102 according to some aspects of the disclosure. As shown in FIG. 5, one or more recessed regions 124 are arranged concentrically around the insert 108. In an aspect, the recessed regions 124 are configured to assist in activating the insert 108 to stimulate the veins in the arch area of the foot.

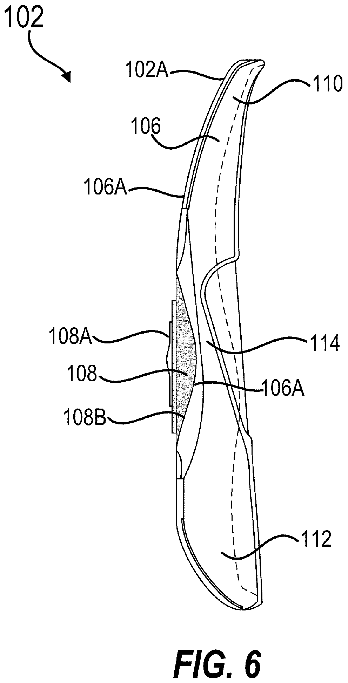

FIG. 6 is a lateral side view of the sole 102 according to some aspects of the disclosure. As shown in FIG. 6, the insert 108 has an oval cross-sectional shape or a rounded triangle cross-sectional shape obtained from a vertical plane along a direction from the toe portion 110 to the heel portion 112 of the base 106. The insert 108 extends into the arch portion 114 of the base 106 from the first surface 106A of the base 106. A second surface 108B of the insert 108 is in contact with the first surface 106A of the base 106. The first surface 108A of the insert 108 is a curved surface that protrudes from the first surface 106A of the base 106.

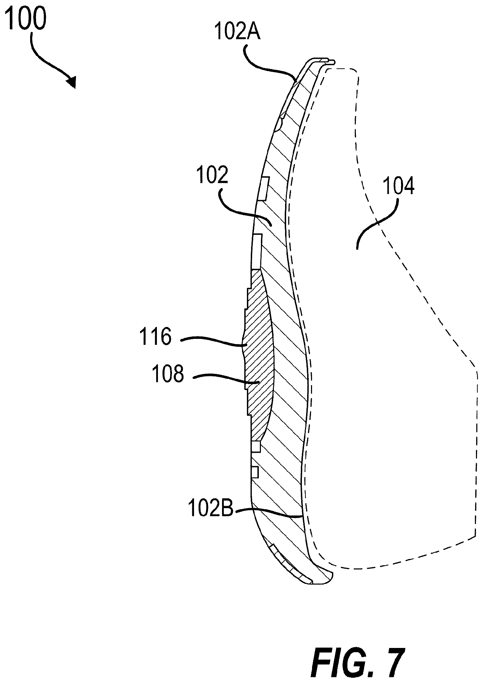

FIG. 7 is a cross-sectional view of the recovery shoe 100 obtained from a vertical plane along a direction from the toe portion to the heel portion of the base 106, such as the direction of A1-A2 in FIG. 5. As shown in FIG. 7, the shoe 100 includes the sole 102 and the upper 104. The lowermost position (or point) 116 of the insert 108 is a lowest point of the first surface 102A of the sole 102. The insert 108 corresponds to an arch region of a foot. The insert 108 has an oval cross-sectional shape or a rounded triangle cross-sectional shape.

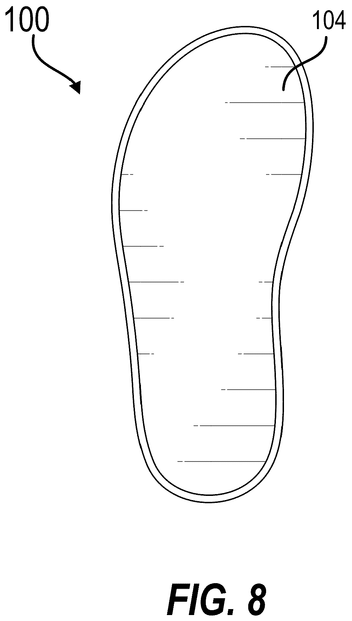

FIG. 8 is a top view of the recovery shoe 100 according to some aspects of the disclosure. In an aspect, a 3D model of a human foot, such as Anatomical Last, is applied to design the upper 104 of the shoe 100 to improve fit and comfort. In an example of FIG. 8, FLL-2730-1 Anatomical Last is applied to design the shoe 100.

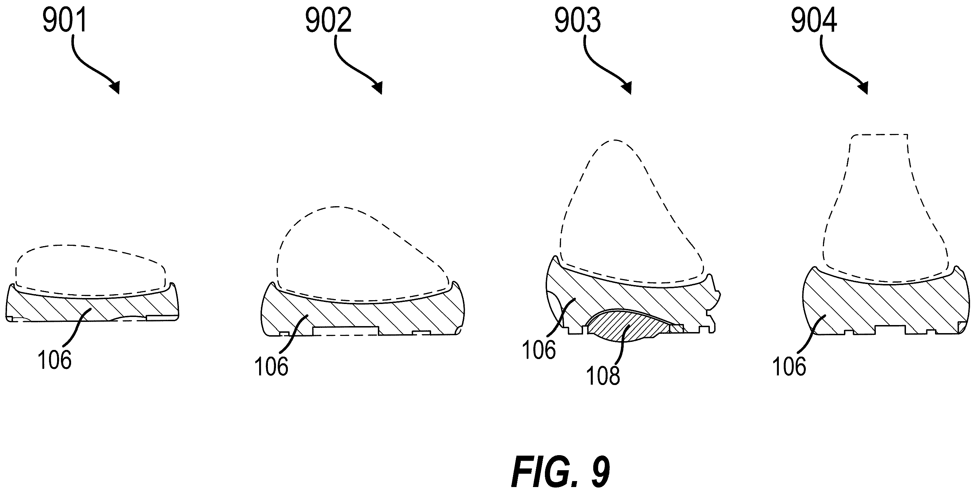

FIG. 9 shows various cross-sectional views 901-904 from a medial side to a lateral side of the recovery shoe 100 according to some aspects of the disclosure. As shown in FIG. 9, the cross-sectional view 901 is obtained from a vertical plane along a direction B1-B2 in FIG. 5. The cross-sectional view 902 is obtained from a vertical plane along a direction C1-C2 in FIG. 5. The cross-sectional view 903 is obtained from a vertical plane along a direction D1-D2 in FIG. 5. The cross-sectional view 904 is obtained from a vertical plane along a direction E1-E2 in FIG. 5.

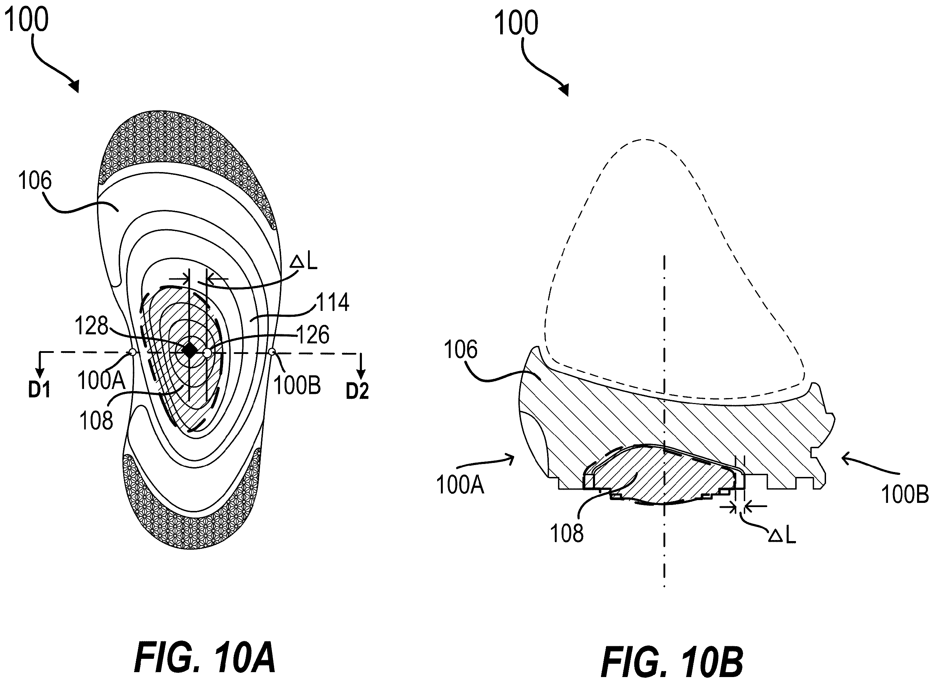

FIG. 10A shows a bottom view of the recovery shoe 100 according to some aspects of the disclosure. FIG. 10B shows a cross-sectional view of the recovery shoe 100 obtained from a vertical plane along a direction D1-D2 in FIG. 10A. As shown in FIG. 10A, the arch portion 114 of the base 106 may include a center position 126 and the insert 108 may include a center position 128. The center position 126 of the arch portion 114 may be a geometric center, a pressure center, or a design center of the sole 102. Thus, the center position 126 may indicate a center of the sole 102. In an example, the geometric center is calculated using an average of x (or horizontal) and y (or vertical) coordinates of all points on the sole. In an example, the pressure center indicates a point where majority of pressure is applied when the shoe is worn. In an example, the design center indicates a point that the shoe designer intended to be the center, often based on aesthetic or functional considerations. In an example, the center position 126 may have a same distance to a medial side 100A of the shoe 100 and a lateral side 100B of the shoe 100. The center position 128 of the insert 108 is shifted from the center position 126 of the arch portion 114 of the base 106 by a distance ΔL. Thus, the center position 128 of the insert 108 is closer to a medial side of the shoe than a lateral side of the shoe. In an example, the distance ΔL is in a range between 2 mm and 8 mm.

Thus, the lowermost position (or point) 116 of the core (or insert) 108 which is a pressure point may be located more to the medial side of the foot for pressing the manual compression area of the plantar veins. A transverse arch of a person's foot is higher on the medial side and has a gradually decreasing structure. In an example, the vertex (or top) of the core (or insert) may be located to the medial side about 5-7mm for the plantar venous pump system. In an example, a center (e.g., 128) of the core (or insert) may be moved by 5 to 7 mm toward the medial side from a center (e.g., 126) of the midsole of the shoe.

In an aspect, the insert may be harder than other portions of the sole so that the insert is able to push the force back to the arch area of the foot. For example, the insert may have a larger density than the other portions of the sole. In an aspect, the insert and the other portions of the sole may have a same density. As mentioned above, the insert protruding from the other regions (e.g., the base) of the sole. When the foot is against the ground, the ground pushes up into the arch area of the foot via the insert. The insert in turn stimulates the veins in the arch area. Accordingly, at each step and every time when a person steps on the insert, the insert may pump more blood through the plantar venous pump comparing to a shoe without the insert. For example, more blood may be pumped by the insert that protrudes from the sole than an arch support from related shoes. In an example, the more the insert protrudes from other portions of the sole, the more blood may be pumped.

In an aspect, the insert may be made of any suitable materials as long as the insert is a lowest point (or region) of the sole of the shoe. When a body weight is applied to the insert, the insert may stimulate the arch area of the foot through pressure.

In an aspect, the insert of the sole and other regions of the sole are separate. Thus, the sole and the other regions of the sole are two pieces. The insert may be inserted into the sole and further be glued with the other regions of the sole.

In an aspect, a chemical composition of the insert is different from a chemical composition of the other regions of the sole. In an aspect, the insert and the other regions of the sole may have a same chemical composition.

In an aspect, the insert and the other regions of the sole are of a same piece. For example, the insert and the other regions of the sole are made together, such as based on a same mold.

In an aspect, the insert of the sole is positioned at the arch area of the foot. In order to make the insert to be positioned at (or corresponding to) the arch area of the foot, a mathematic equation is applied to different sizes of the shoes. Based on the mathematic equation, the insert is arranged at the arch area of the foot for each size of the shoes. Thus, an anatomical placement of the insert in the shoe is aligned with the plantar venous plexus, which includes a series of veins. Accordingly, the insert that has a rounded triangle shape or oval shape is corresponding to (or in contact with) the biggest cluster of veins in the lower extremity of the body.

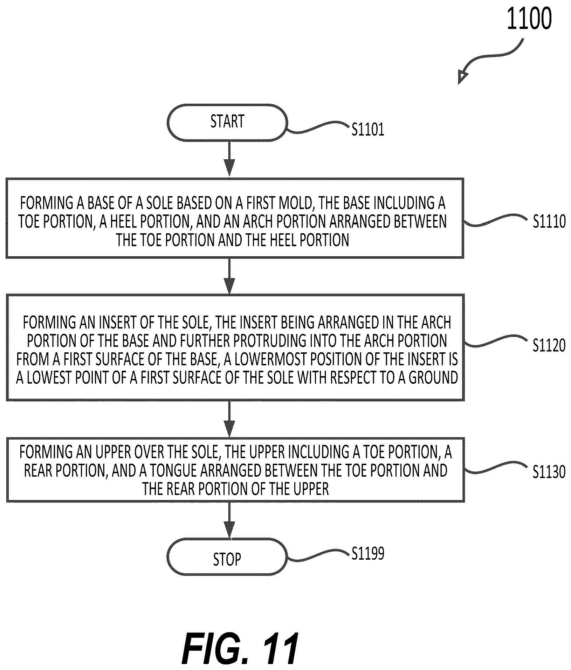

FIG. 11 shows a flow chart outlining a process (1100) to form a shoe according to an aspect of the disclosure. The process starts at (S1101) and proceeds to (S1110).

At (S1110), a base of a sole is formed based on a first mold, where the base includes a toe portion, a heel portion, and an arch portion arranged between the toe portion and the heel portion.

At (S1120), an insert of the sole is formed. The insert is arranged in the arch portion of the base and further protruding into the arch portion from a first surface of the base. A lowermost position of the insert is a lowest point of a first surface of the sole that is in contact with a ground.

At (S1130), an upper is formed over the sole, where the upper includes a toe portion, a rear portion, and a tongue arranged between the toe portion and the rear portion.

Then, the process proceeds to (S1199) and terminates.

The process (1100) can be suitably adapted. Step(s) in the process (1100) can be modified and/or omitted. Additional step(s) can be added. Any suitable order of implementation can be used.

The use of "at least one of" or "one of" in the disclosure is intended to include any one or a combination of the recited elements. For example, references to at least one of A, B, or C; at least one of A, B, and C; at least one of A, B, and/or C; and at least one of A to C are intended to include only A, only B, only C or any combination thereof. References to one of A or B and one of A and B are intended to include A or B or (A and B). The use of "one of" does not preclude any combination of the recited elements when applicable, such as when the elements are not mutually exclusive.

While this disclosure has described several examples of aspects, there are alterations, permutations, and various substitute equivalents, which fall within the scope of the disclosure. It will thus be appreciated that those skilled in the art will be able to devise numerous systems and methods which, although not explicitly shown or described herein, embody the principles of the disclosure and are thus within the spirit and scope thereof.

## Claims

1. A shoe comprising:
a sole including a base and an insert, the base including a toe portion, a heel portion, and an arch portion arranged between the toe portion and the heel portion, the insert being arranged in the arch portion of the base and further protruding into the arch portion from a first surface of the base, a lowermost position of the insert is a lowest point of a first surface of the sole with respect to a ground; and
an upper over the sole including a toe portion, a rear portion, and a tongue arranged between the toe portion and the rear portion of the upper,
wherein the insert is configured to provide pressure into an arch region of a foot of a user when the shoe is worn and the sole is pressed by the user.

2. The shoe of claim 1, wherein the base and the insert are made of different materials.

3. The shoe of claim 1, wherein a density of the insert and a density of the base are different.

4. The shoe of claim 1, wherein a density of the insert is larger than a density of the base.

5. The shoe of claim 1, wherein a center position of the insert is shifted from a center position of the arch portion of the base by a distance from 4mm to 8mm such that the center position of the insert is closer to a medial side of the shoe than a lateral side of the shoe.

6. The shoe of claim 1, wherein at least one recessed region is formed in the base of the shoe that is arranged concentrically around the insert.

7. The shoe of claim 1, wherein the insert has one of an oval cross-sectional shape and a rounded triangle cross-sectional shape obtained from a vertical plane along a direction from the toe portion to the heel portion of the base.

8. The shoe of claim 1, wherein the insert has one of an oval cross-sectional shape and a rounded triangle cross-sectional shape obtained from a vertical plane along to a direction from a medial side to a lateral side of the shoe.

9. The shoe of claim 1, wherein the insert corresponds to the arch region of the foot and configured to pump blood of a venous plexus in the arch region of the foot.

10. The shoe of claim 1, wherein the insert and the base are separate pieces, the insert being attached to the base by inserting from the first surface of the base of the sole.

11. The shoe of claim 1, wherein the insert and the base are a single piece that is formed together based on a mold.

12. The shoe of claim 1, wherein the lowermost position of the insert is positioned on a medial side of the arch portion and corresponds to veins in the arch region of the foot.

13. The shoe of claim 1, wherein:
a first surface of the insert is a curved surface that protrudes from the first surface of the base of the sole.

14. A method of forming a shoe, the method comprising:
forming a base of a sole based on a first mold, the base including a toe portion, a heel portion, and an arch portion arranged between the toe portion and the heel portion;
forming an insert of the sole, the insert being arranged in the arch portion of the base and further protruding into the arch portion from a first surface of the base, a lowermost position of the insert is a lowest point of a first surface of the sole with respect to a ground; and
forming an upper over the sole, the upper including a toe portion, a rear portion, and a tongue arranged between the toe portion and the rear portion of the upper.

15. The method of claim 14, wherein the forming the insert of the sole further comprises:
forming the insert of the sole based on a second mold such that the insert and the base are separate pieces.

16. The method of claim 14, wherein the forming the insert of the sole further comprises:
forming the insert of the sole based on the first mold such that the insert and the base are a single piece that is formed together based on the first mold.

17. The method of claim 14, wherein a center position of the insert is shifted from a center position of the arch portion of the base by a distance from 4mm to 8mm such that the center position of the insert is closer to a medial side of the shoe than a lateral side of the shoe.

18. The method of claim 14, further comprising:
forming at least one recessed region in the base of the shoe such that the at least one recessed region is arranged concentrically around the insert.

19. The shoe of claim 14, wherein the insert is positioned around an arch region of a foot and configured to pump blood of a venous plexus in the arch region of the foot.

20. The shoe of claim 14, wherein the lowermost position of the insert is positioned on a medial side of the arch portion and corresponds to veins in an arch region of a foot.
